# EUROPEAN PATENT APPLICATION

(11) **EP 1 970 587 A2**
(43) Date of publication of application: **17.09.2008**
(21) Application number: 08152675.8
(22) Date of filing: 13.03.2008
(51) Int. Cl.: F16D 9/06, F16H 55/36

(54) **Power transmission device of a compressor**

(30) Priority: 14.03.2007 JP 2007065390
(71) Applicant: KABUSHIKI KAISHA TOYOTA JIDOSHOKKI, Kariya-shi, Aichi 448-8671 (JP)
(72) Inventor: Enkokijima, Fuminobu, Kariya-shi Aichi 448-8671 (JP); Yokomachi, Naoya, Kariya-shi Aichi 448-8671 (JP); Inoue, Masaki, Kariya-shi Aichi 448-8671 (JP)
(74) Representative: TBK-Patent

(57) **Abstract**

A compressor (10) has a housing (12) and a rotary shaft (17). A power transmission device of the compressor includes a hub (26), an outer shaft portion (18) and a torque transmitting member (22). The hub has an internally threaded hole (27). The outer shaft portion has a first shaft portion (18A) and a second shaft portion (18B). The first shaft portion is located adjacent to an outer wall of the housing (12). The second shaft portion has external splines (19). The torque transmitting member has a large-diameter portion (23), a small-diameter portion (24) and a shaft hole (25). The large-diameter portion has a thrust-load receiving portion (23A). The small-diameter portion (24) is screwed in the threaded hole. The shaft hole receives therein the outer shaft portion, and has a first hole (25A) and a second hole (25B). The first shaft portion is press-fitted in the first hole and the second hole has internal splines. The second shaft portion (18B) is fitted in the second hole (25B) by spline engagement.

## Description

### BACKGROUND OF THE INVENTION

The present invention relates to a power transmission device of a compressor and more particularly to a power transmission device suitable for use in an automotive air-conditioning compressor driven by an external power source such as an engine through a belt.

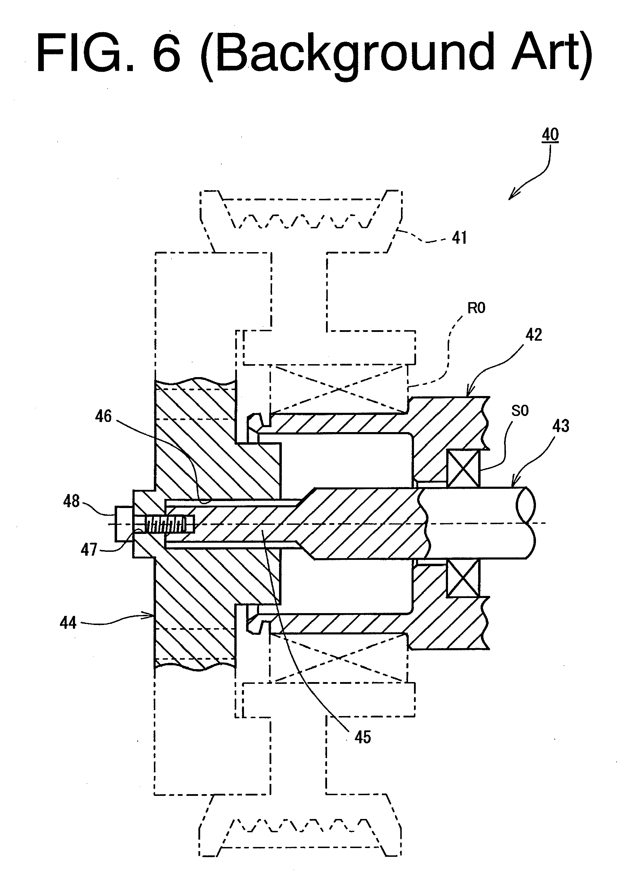

An automotive air-conditioning compressor has a power transmission device, denoted as 40 shown in Fig. 6, for transmitting power from an external power source such as an engine to the compressor through a belt. The compressor has a housing 42 on which a pulley 41 is rotatably supported through a radial bearing R0. The pulley 41 receives power from the engine (not shown). The compressor has a rotary shaft 43 one end of which extends out of the housing 42. A hub 44 is fixed to the end of the rotary shaft 43 and connected to the pulley 41 for rotation therewith. Thus, the power received by the pulley 41 is transmitted to the rotary shaft 43 through the hub 44.

More specifically, the rotary shaft 43 has at the end thereof a splined shaft portion 45 and the hub 44 has at the center thereof a splined hole 46 and a bolt hole 47. The splined hole 46 and the bolt hole 47 are connected to each other. The splined shaft portion 45 is inserted in the splined hole 46 and a bolt 48 is screwed into the end of the rotary shaft 43 through the hole 47 so that the rotary shaft 43 is secured to the hub 44. Because the hub 44 is thus connected to the rotary shaft 43 through the splined shaft portion 45 of the rotary shaft 43, the entire torque from the pulley 41 is transmitted to the splined shaft portion 45. In the compressor of a clutch less type, failure of the compressor, for example seizure, causes the belt to be broken. To avoid such trouble, a torque limiter may be provided in the power transmission device 40 not to transmit excessive torque from the pulley 41 to the rotary shaft 43.

Japanese Unexamined Patent Application Publication No. 2005-140280 (or the first reference) also discloses a power transmission device of a compressor. This power transmission device has a cylindrical adapter arranged around a drive shaft of the compressor and a hub arranged around the adapter. To be more specific, the drive shaft has an externally threaded end and the adapter has therethrough an internally threaded hole, through which the end of the drive shaft is screwed. The adapter has external threads and the hub has therethrough an internally threaded hole in which the adapter is screwed. By screwing the adapter into the hub to be pressed against a bearing surface of a bearing member fixed on the drive shaft, the hub is fastened securely to the drive shaft.

In the power transmission device according to this first reference, torque transmitted from the hub to the drive shaft is divided into two components of torque. One component is transmitted from the hub to the bearing surface of the bearing member and the other is transmitted from the internal threads of the hub to the external threads of the adapter. Each component becomes smaller than the maximum torque transmitted from the hub to the drive shaft. In this type of transmission torque, the tightening torque of the adapter in fastening the adapter to the drive shaft can be set smaller than the maximum torque, so that load acting on the drive shaft can be reduced.

Japanese Unexamined Patent Application Publication No. 2005-90565 (or the second reference) further discloses a power transmission device. In this power transmission device, a part of armature boss is fitted by serration engagement on the front end of a rotary shaft of a compressor while another part of the armature boss is press-fitted on the front end of the rotary shaft.

Japanese Unexamined Patent Application Publication No. 7-269601 (or the third reference) further discloses an armature assembly for electromagnetic coupling. This armature assembly has a spider, an annular armature plate and an adapter plate. The spider is made of a resilient plastic and supports the armature plate. The adapter plate is formed in the spider by insert molding and mounted on a hub. The armature assembly may be changed slightly as needed so that the armature assembly may be combined with a rotary shaft by corresponding to various types of hubs. Each hub is keyed to the rotary shaft, and the hub and the adapter plate are engaged by screws.

According to the background art of Fig. 6, the torque from the pulley 41 is transmitted to the rotary shaft 43 sufficiently if the splined shaft portion 45 is strong enough to resist the torque transmission. However, the diameter of the splined shaft portion 45 is made inevitably smaller than that of the rotary shaft 43 in the housing 42. This is because the splined shaft portion 45 is passed through a sealing member S0 sliding contact with the outer periphery of the rotary shaft 43 in the housing 42 in assembling the compressor. There is a fear that the splined shaft portion 45 having a relatively small diameter and receiving the entire torque may lack in torsional strength or in the spline strength. If a torque exceeding a permissible value is applied to the splined shaft portion 45, the spline shaft portion 45 may be damaged before the torque limiter operates.

In the power transmission device according to the first reference, the adapter is engaged at the internal threads thereof with the drive shaft and at the external threads thereof with the hub, respectively. Although the load applied to the drive shaft is reduced, a tensile force is applied to the drive shaft, so that there remains a thrust load. In addition, the maximum torque transmitted from the hub to the drive shaft needs to be considered carefully in determining the tightening torque between the adapter and the drive shaft.

In the power transmission device according to the second reference, a part of the armature boss is fitted by serration engagement on the front end of the rotary shaft and another part of the armature boss is press-fitted on the same front end. However, the armature boss corresponding to a hub is merely directly connected to the rotary shaft. That is, there is no idea in this reference about reinforcing the serrated portion of the rotary shaft through which the torque is transmitted. In addition, the power transmission device is subject to design limitation. That is, the power transmission device cannot employ a torque limiter which is broken based on axial force (or thrust load).

In the armature assembly according to the third reference wherein the hub is keyed to the rotary shaft, the number of parts is increased. In addition, application of the assembly to a rotary shaft with a small diameter is practically difficult.

The present invention, which has been made in light of the above problems, is directed to a power transmission device of a compressor having a rotary shaft with a splined shaft portion receiving torque from a pulley, which avoids excessive load applied to the splined shaft portion. This power transmission device of the compressor makes possible the use of a torque limiter which is broken based on axial force.

### SUMMARY OF THE INVENTION

The present invention provides a power transmission device of a compressor. The compressor has a housing and a rotary shaft rotatably supported by the housing. The power transmission device includes a pulley, a hub, an outer shaft portion and a torque transmitting member. The pulley is rotatably mounted around the housing. The hub is connected to the pulley for rotation therewith. The outer shaft portion is rotated synchronously with the rotary shaft. The torque transmitting member is mounted on the outer shaft portion. At least a part of the torque transmitting member is interposed between the hub and the outer shaft portion for transmitting torque from the hub to the outer shaft portion. The power transmission device is characterized in that the hub has an internally threaded hole which is arranged coaxially with the outer shaft portion. The outer shaft portion has a first shaft portion and a second shaft portion. The first shaft portion is located adjacent to an outer wall of the housing. The second shaft portion has external splines and is smaller in outer diameter than the first shaft portion. The torque transmitting member has a large-diameter portion, a small-diameter portion and a shaft hole, The large-diameter portion has a thrust-load receiving portion for receiving thrust load from the hub. The small-diameter portion is screwed in the threaded hole of the hub. The shaft hole receives therein the outer shaft portion. The shaft hole has a first hole and a second hole. The first shaft portion is press-fitted in the first hole and the second hole has internal splines. The second shaft portion is fitted in the second hole by spline engagement.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a longitudinal sectional view showing a power transmission device of a compressor according to a first embodiment of the present invention;
Fig. 2 is a front view showing the power transmission device of Fig. 1;
Fig. 3 is a partial enlarged view of the power transmission device of Fig. 1;
Fig. 4 is a longitudinal sectional view showing a power transmission device of a compressor according to a second embodiment of the present invention;
Fig. 5 is a partial enlarged view of the power transmission device of Fig. 4; and
Fig. 6 is a longitudinal sectional view showing a power transmission device of a compressor according to a background art.

### DETAILED DESCRIPTION OF THE PREFERRED EMBODIMENTS

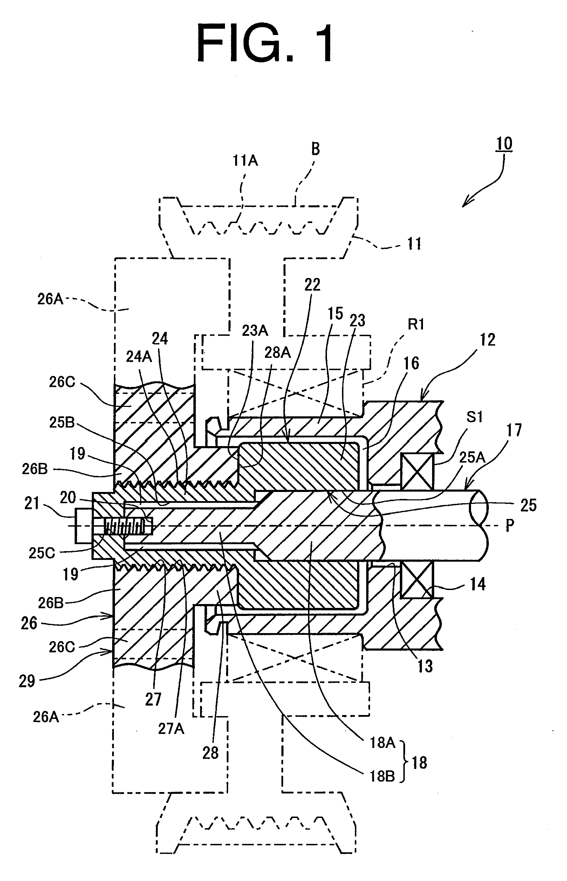

The following will describe the power transmission device of the compressor according to the first embodiment of the present invention with reference to Figs. 1 to 3. The power transmission device of the present embodiment is used in an automotive air-conditioning compressor for transmitting power from an automotive engine (not shown) to a rotary shaft of the compressor. It is noted that the left-hand side and the right-hand side of the compressor as viewed in Fig. 1 correspond to the front and rear of the compressor, respectively.

Referring to Fig. 1, the compressor has a housing 12 and a rotary shaft 17 rotatably supported by the housing 12 through a bearing (not shown). The housing 12 has at the front end thereof an outer wall through which a hole 13 is formed. The rotary shaft 17 extends in the front-and-rear direction through the hole 13. Major part of the rotary shaft 17 is located rearward the outer wall of the housing 12 and the front end portion of the rotary shaft 17 is located in front of the outer wall of the housing 12. This front end portion of the rotary shaft 17 located in front of the outer wall of the housing 12 is referred to as an outer shaft portion 18 hereinafter. In the present invention, the outer shaft portion 18 is integrated with the rotary shaft 17 and serves as one end portion of the rotary shaft 17. A sealing member S1 is located between the inner periphery 14 of the housing 12 and the outer periphery of the rotary shaft 17 in sliding contact with the outer periphery of the rotary shaft 17. The sealing member S1 serves to prevent refrigerant gas and lubricating oil from leaking out of the housing 12 through the hole 13.

The outer shaft portion 18 has a first shaft portion 18A and a second shaft portion 18B. The first shaft portion 18A is press-fitted in a torque transmitting member 22 which will be described later. The first shaft portion 18A is located adjacent to the housing 12 and has the same diameter as the major part of the rotary shaft 17 located rearward the outer wall of the housing 12. The second shaft portion 18B is located at the front end of the rotary shaft 17. The second shaft portion 18B has external splines or a plurality of spline teeth 19. As shown in Fig. 1, the outer diameter of the second shaft portion 18B including the diameter of the spline teeth 19 is smaller than that of the first shaft portion 18A. The second shaft portion 18B has at the front end thereof a bolt hole 20 in alignment with the axis P of the rotary shaft 17.

The compressor also has a power transmission device 10. The power transmission device 10 has a pulley 11, a hub 26, the outer shaft portion 18 and the torque transmitting member 22. The pulley 11 is rotatably mounted around the housing 12. The hub 26 is connected to the pulley 11 for rotation therewith. The outer shaft portion 18 forms one end portion of the rotary shaft 17. The torque transmitting member 22 is mounted on the outer shaft portion 18. At least a part of the torque transmitting member 22 is interposed between the hub 26 and the rotary shaft 17 for transmitting torque from the hub 26 to the rotary shaft 17.

The housing 12 has a boss 15 extending from the front side of the outer wall of the housing 12 so as to surround a part of the outer shaft portion 18. The pulley 11 is located around the boss 15 of the housing 12 and rotatably supported by the boss 15 through a radial bearing R1. The pulley 11 has an outer peripheral surface 11A around which a belt B made of rubber-based material is wound. The belt B is also wound around another pulley mounted on the output shaft of the automotive engine (not shown) for transmitting the power of the automotive engine to the pulley 11.

The hub 26 is made in the form of a disc and fixed to the front side of the pulley 11 by any suitable fixing means (not shown) for transmitting the power from the pulley 11 to the rotary shaft 17. The hub 26 has a boss 28 extending from the rear side of the hub 26 toward the housing 12. The end face 28A of the boss 28 adjacent to the housing 12 is formed perpendicular to the axis P. The hub 26 has at the center thereof an internally threaded hole 27 with internal threads 27A. The inner diameter of the threaded hole 27 is larger than the outer diameter of the outer shaft portion 18. The threaded hole 27 of the hub 26 is arranged coaxially with the rotary shaft 17. Major part of the second shaft portion 18B of the outer shaft portion 18 is located in the region of the threaded hole 27.

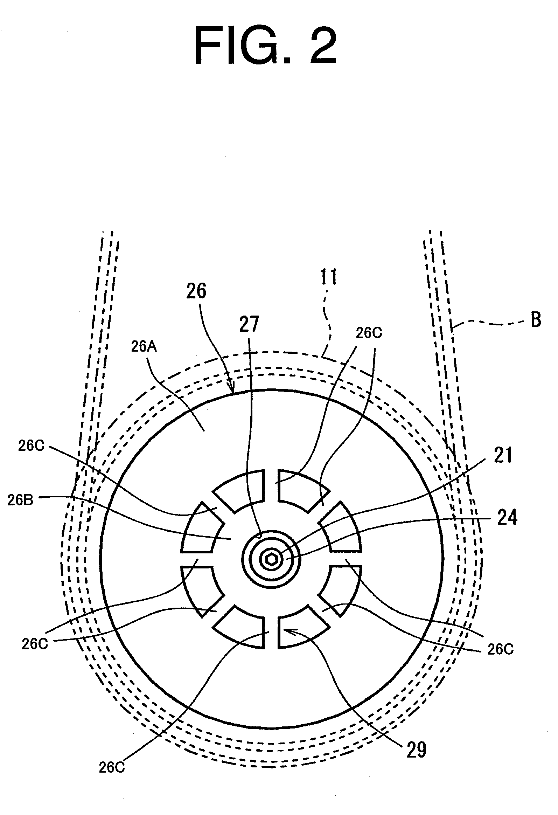

The hub 26 has a power shutoff portion 29 that is breakable to serve as a torque limiter. As shown in Fig. 2, the hub 26 has a radially outer portion 26A, a radially inner portion 26B and a plurality of connecting portions 26C which connect the outer portion 26A and the inner portion 26B. In the present embodiment, the number of connecting portions 26C is eight. The connecting portions 26C are broken when a torque exceeding a certain permissible value is developed between the pulley 11 and the rotary shaft 17, thus serving as the power shutoff portion 29.

The torque transmitting member 22 has a large-diameter portion 23, a small-diameter portion 24 and a shaft hole 25. The large-diameter portion 23 is located in a space 16 formed between the boss 15 and the first shaft portion 18A of the outer shaft portion 18. The small-diameter portion 24 is formed integrally with the large-diameter portion 23 and extends frontward. The small-diameter portion 24 has an outer diameter smaller than that of the large-diameter portion 23. The large-diameter portion 23 has an end face 23A in contact with the end face 28A for receiving thrust load acting from the hub 26. In the present invention, the end face 23A of the first element 23 serves as a thrust-load receiving portion. The shaft hole 25 receives therein the outer shaft portion 18.

The shaft hole 25 has a first hole 25A formed in the large-diameter portion 23 of the torque transmitting member 22 and a second hole 25B formed in the small-diameter portion 24. The first shaft portion 18A of the outer shaft portion 18 is press-fitted in the first hole 25A of the large-diameter portion 23 and held by the large-diameter portion 23 of the torque transmitting member 22. Thus, the diameter of the first hole 25A is slightly smaller than that of the first shaft portion 18A.

The small-diameter portion 24 of the torque transmitting member 22 is formed on the outer periphery thereof with external threads 24A. As shown in Fig. 1, the small-diameter portion 24 of the torque transmitting member 22 is screwed in the threaded hole 27 of the hub 26 thereby to fix the small-diameter portion 24 to the hub 26. The external threads 24A of the small-diameter portion 24 and the internal threads 27A of the threaded hole 27 are formed in such directions that the torque transmitting member 22 and the hub 26 are tightened to each other by the torque during the power transmission. The second hole 25B has internal splines and receives the second shaft portion 18B in the second hole 25B. The second hole 25B is formed at the center of the small-diameter portion 24 and is adjacent to the first hole 25A. The second shaft portion 18B is inserted into the second hole 25B thereby to fit the second shaft portion 18B into the second hole 25B of the torque transmitting member 22 by spline engagement. The outer shaft portion 18 of the rotary shaft 17 is thus connected to the shaft hole 25.

The torque transmitting member 22 has at the front end thereof a hole 25C which is adjacent to the second hole 25B. A bolt 21 is inserted through the hole 25C and screwed into the bolt hole 20 of the rotary shaft 17 for fastening securely the outer shaft portion 18 to the torque transmitting member 22.

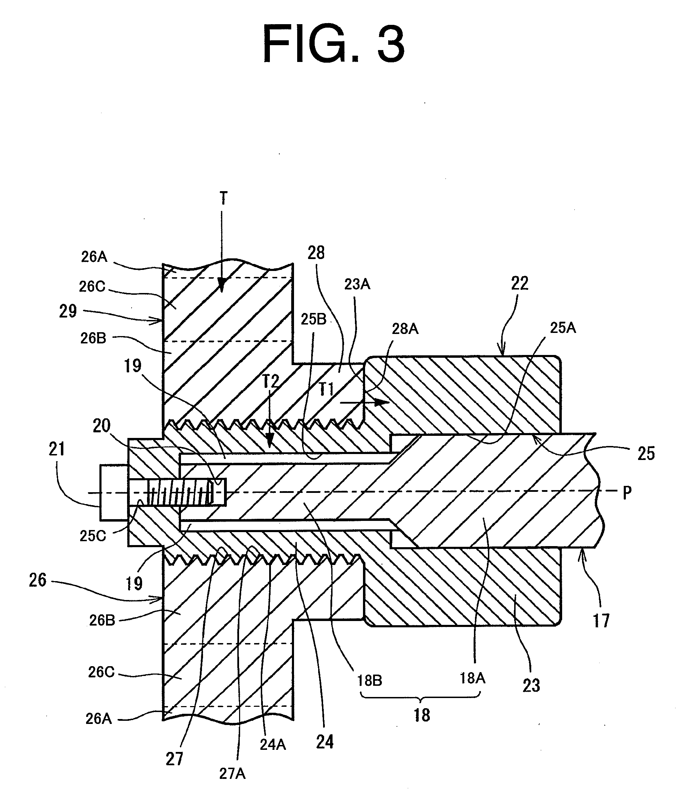

The following will describe the operation of the power transmission device 10. As shown in Fig. 3, the torque T is transmitted from the hub 26 to the rotary shaft 17 through two different transmission paths. The first component T1 of the torque T is transmitted along the first transmission path. That is, the first component T1 is transmitted from the radially inner portion 26B of the hub 26 to the first shaft portion 18A of the rotary shaft 17 through the end face 28A of the boss 28 and the end face 23A of the torque transmitting member 22. The second component T2 of the torque T is transmitted along the second transmission path. That is, the second component T2 is transmitted from the radially inner portion 26B of the hub 26 to the second shaft portion 18B of the rotary shaft 17 through the internal threads 27A of the hub 26 and the external threads 24A of the torque transmitting member 22.

According to the power transmission device 10 of the present embodiment, the torque T is divided into the two components T1 and T2. The first component T1 is transmitted to the first shaft portion 18A and the second component T2 is transmitted to the second shaft portion 18B. This power transmission device 10 is significantly different from the power transmission device 40 according to the background art of Fig. 6, wherein the entire torque is transmitted to the splined shaft portion 45. Because the first component T1 is transmitted to the first shaft portion 18A, the load applied to the second shaft portion 18B during the power transmission is lower than that applied to the splined shaft portion 45 in the background art of Fig. 6. Therefore, if a torque T exceeding a permissible value is produced between the pulley 11 and the rotary shaft 17, the connecting portions 26C are broken before the second shaft portion 18B is broken by the second component T2 of the torque T. Thus, excessive load applied to the second shaft portion 18B is avoided.

The hub 26 and the torque transmitting member 22 are engaged with each other by screw threads. This causes a thrust load (or axial force) between the hub 26 and the torque transmitting member 22 when the torque is being transmitted from the hub 26 to the torque transmitting member 22. This thrust load has an influence on the torque transmission characteristics to the first shaft portion 18A through the end face 23A. In detail, the magnitude of the torque T1 is in proportion to that of the thrust load. On the other hand, thrust load is not developed between the torque transmitting member 22 and the second shaft portion 18B which are engaged with each other by spline engagement. Because of the above screw thread engagement and spline engagement, the thrust load does not act on the second shaft portion 18B although acting on the torque transmitting member 22. Thus, there is no need to consider the strength of the second shaft portion 18B against the thrust load and, therefore, the second shaft portion 18B may be made smaller in diameter.

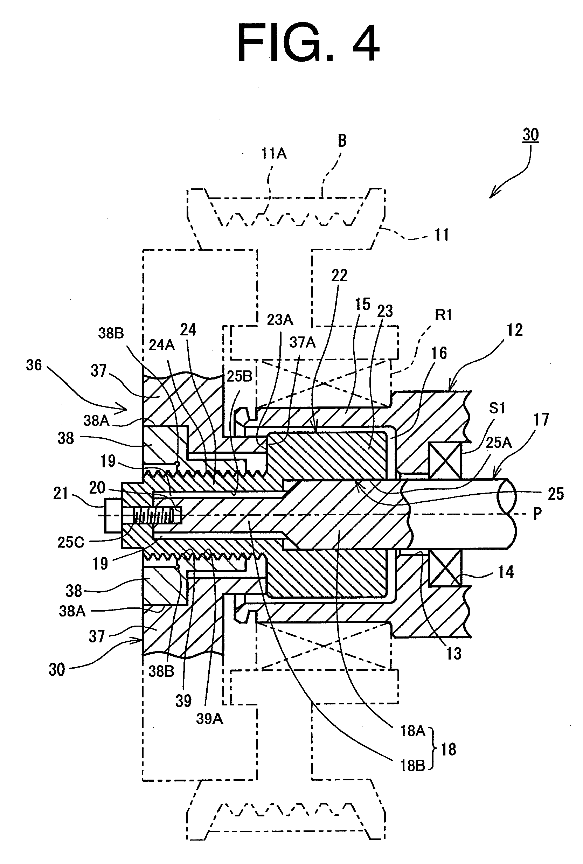

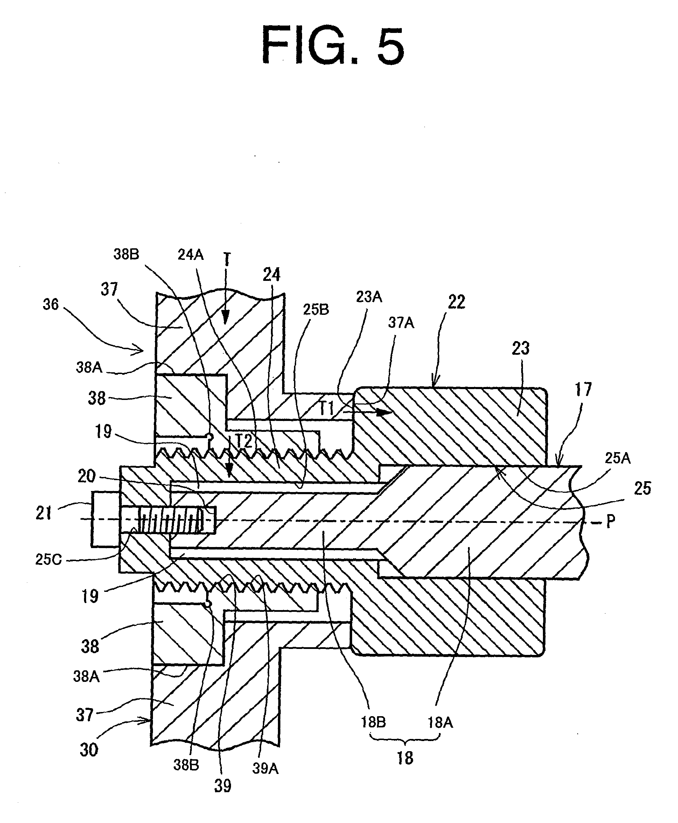

The power transmission device of the first embodiment has the following advantageous effects.
(1) When the torque T transmitted from the pulley 11 to the hub 26 is transmitted to the rotary shaft 17 through the torque transmitting member 22 and the outer shaft portion 18, the second component T2 is transmitted to the second shaft portion 18B and the first component T1 is transmitted to the first shaft portion 18A. In this case, thrust load whose magnitude is in proportion to the torque T is developed between the hub 26 and the small-diameter portion 24 of the torque transmitting member 22. However, thrust load is not developed between the torque transmitting member 22 and the second shaft portion 18B. Thus, if the outer shaft portion 18 has the second shaft portion 18B to transmit the torque T, the second shaft portion 18B may be avoided being broken due to shortage of torsional strength of the second shaft portion 18B and the strength of the spline teeth 19. Therefore, the power transmission device 10 of the present embodiment can avoid excessive load applied to the second shaft portion 18B.
(2) Because thrust load is not developed between the torque transmitting member 22 and the second shaft portion 18B, there is no need to consider the strength of the second shaft portion 18B against the thrust load. This enables reduction of the diameter of the second shaft portion 18B and increase of the length of the second shaft portion 18B.
(3) The breakable power shutoff portion 29 of the hub 26 that serves as a torque limiter is broken when the torque T exceeding a permissible value is developed between the rotary shaft 17 and the pulley 11. When the power shutoff portion 29 is broken, the hub 26 is divided into two parts including the radially outer portion 26A and the radially inner portion 26B. Thus, the torque limiter is provided in the power transmission device 10 without increasing the number of parts.
   The following will describe the power transmission device of the compressor according to the second embodiment of the present invention with reference to Figs. 4 and 5. The power transmission device of the second embodiment has like or same parts or elements as those of the first embodiment. For the sake of convenience of explanation, such parts or elements will be referred to by the same reference numerals as those used in the first embodiment, and the description of the parts or elements will be omitted.
   Referring to Fig. 4, the power transmission device is designated by reference numeral 30. The power transmission device 30 has the pulley 11, a hub 36, the outer shaft portion 18 and the torque transmitting member 22. The pulley 11 is rotatably mounted around the housing 12. The hub 36 is connected to the pulley 11 for rotation therewith. The outer shaft portion 18 forms one end portion of the rotary shaft 17. The torque transmitting member 22 is mounted on the outer shaft portion 18. At least a part of the torque transmitting member 22 is interposed between the hub 36 and the outer shaft portion 18 for transmitting torque from the hub 36 to the rotary shaft 17.
   The hub 36 has a hub body 37 and a power shutoff member 38. The hub body 37 is connected to the pulley 11. The power shutoff member 38 is interposed between the hub body 37 and the small-diameter portion 24 of the torque transmitting member 22. The end face 37A of the hub body 37 is in contact with the end face 23A of the large-diameter portion 23 of the torque transmitting member 22 for receiving a thrust load acting from the hub 36. The power shutoff member 38 has at the center thereof an internally threaded hole 39 with internal threads 39A. As shown in Fig. 4, the small-diameter portion 24 of the torque transmitting member 22 is screwed in the threaded hole 39. The power shutoff member 38 has an outer periphery 38A and a breakable portion 38B. The outer periphery 38A of the power shutoff member 38 is mechanically fixed to the hub body 37. When a torque T exceeding a permissible value is produced between the rotary shaft 17 and the pulley 11, the breakable portion 38B is broken based on the thrust load (axial force) occurring in proportion to the torque. That is, the power shutoff member 38 serves as a torque limiter which is broken based on the axial force.
   In the present embodiment, the outer periphery 38A of the power shutoff member 38 is hexagon-shaped as viewed along the axis P, and the hub body 37 has a hexagonal socket into which the power shutoff member 38 is fitted. By fitting the power shutoff member 38 into the hexagonal socket of the hub body 37 through spigot joint, the power shutoff member 38 is mechanically fixed to the hub body 37. Fixing of the power shutoff member 38 to the hub body 37 may be accomplished by press-fitting. The fixing is not limited to the foregoing methods, but it may be done in any other suitable method as long as the power shutoff member 38 is mechanically fixed to the hub body 37.
   In the present embodiment, the torque T is transmitted from the hub 36 to the rotary shaft 17 through two different transmission paths as shown in Fig. 5. The first component T1 of the torque T is transmitted along the first transmission path from the hub body 37 to the first shaft portion 18A of the outer shaft portion 18 through the end faces 37A, 23A of the hub body 37 and the torque transmitting member 22. The second component T2 of the torque T is transmitted along the second transmission path from the power shutoff member 38 to the second shaft portion 18B of the outer shaft portion 18. The second component T2 passes through the internal threads 39A of the power shutoff member 38 and external threads 24A of the torque transmitting member 22. Because the first component T1 is transmitted to the first shaft portion 18A through the end face 23A, the load applied to the second shaft portion 18B during the power transmission is reduced. If a torque T exceeding a permissible value is produced between the pulley 11 and the rotary shaft 17, the breakable portion 38B is broken based on the thrust load occurring in proportion to the torque.
   The above-described second embodiment of the present invention provides the same advantageous effects (1) and (2) of the first embodiment. In addition, the second embodiment offers the following advantageous effect.
(4) In the present embodiment, a torque limiter which is broken based on the axial force can be used in a power transmission device of a compressor whose rotary shaft has a splined shaft portion for torque transmission.

The present invention is not limited to the above-described embodiments, but may be modified variously within the scope of the invention, as exemplified below.

Although in both of the embodiments the bolt 21 is provided for preventing the outer shaft portion 18 from being pulled away from the torque transmitting member 22, the present invention does not necessarily require such a bolt. As long as the first shaft portion is press-fitted in the first hole of the torque transmitting member and held securely by the torque transmitting member, for example, with sufficient frictional force, such a bolt is unnecessary. In this case, neither the bolt hole of the torque transmitting member nor the bolt hole of the second shaft portion is required.

In both embodiments the second shaft portion 18B is fitted in the second hole 25B of the torque transmitting member 22 by spline engagement. However, the second shaft portion may be tightly fitted in the second hole of the torque transmitting member by serration engagement, which dispenses with the above bolt. In addition, neither the bolt hole of the torque transmitting member nor the bolt hole of the second shaft portion is required.

In both embodiments, the outer shaft portion 18 and the rotary shaft 17 are integrated with each other. However, the outer shaft portion and the rotary shaft may be differently-constructed and connected each other. In this case, materials of the outer shaft portion and the rotary shaft may be variously selected.

Therefore, the present examples and embodiments are to be considered as illustrative and not restrictive, and the invention is not to be limited to the details given herein but may be modified within the scope of the appended claims.
A compressor has a housing and a rotary shaft. A power transmission device of the compressor includes a hub, an outer shaft portion and a torque transmitting member. The hub has an internally threaded hole. The outer shaft portion has a first shaft portion and a second shaft portion. The first shaft portion is located adjacent to an outer wall of the housing. The second shaft portion has external splines. The torque transmitting member has a large-diameter portion, a small-diameter portion and a shaft hole. The large-diameter portion has a thrust-load receiving portion. The small-diameter portion is screwed in the threaded hole. The shaft hole receives therein the outer shaft portion, and has a first hole and a second hole. The first shaft portion is press-fitted in the first hole and the second hole has internal splines. The second shaft portion is fitted in the second hole by spline engagement.

## Claims

1. A power transmission device (10, 40) of a compressor, wherein the compressor has a housing (12) and a rotary shaft (17) rotatably supported by the housing (12), the power transmission device (10, 40) comprising:
a pulley (11) rotatably mounted around the housing (12);
a hub (26, 36) connected to the pulley (11) for rotation therewith;
an outer shaft portion (18) rotated synchronously with the rotary shaft (17); and
a torque transmitting member (22) mounted on the outer shaft portion (18), wherein at least a part of the torque transmitting member (22) is interposed between the hub (26, 36) and the outer shaft portion (18) for transmitting torque from the hub (26, 36) to the outer shaft portion (18);
**characterized in that** the hub (26, 36) has an internally threaded hole (27, 39) which is arranged coaxially with the outer shaft portion (18),
wherein the outer shaft portion (18) has a first shaft portion (18A) and a second shaft portion (18B), wherein the first shaft portion (18A) is located adjacent to an outer wall of the housing (12), wherein the second shaft portion (18B) has external splines (19) and is smaller in outer diameter than the first shaft portion (18A),
wherein the torque transmitting member (22) has a large-diameter portion (23), a small-diameter portion (24) and a shaft hole (25), wherein the large-diameter portion (23) has a thrust-load receiving portion (23A) for receiving thrust load from the hub (26, 36), wherein the small-diameter portion (24) is screwed in the threaded hole (27, 39) of the hub (26, 36), wherein the shaft hole (25) receives therein the outer shaft portion (18),
wherein the shaft hole (25) has a first hole (25A) and a second hole (25B), wherein the first shaft portion (18A) is press-fitted in the first hole (25A) and a second hole (25B) has internal splines, wherein the second shaft portion (18B) is fitted in the second hole (25B) by spline engagement.

2. The power transmission device (10, 40) according to claim 1, **characterized in that** the thrust-load receiving portion (23A) of the large-diameter portion (23) is an end face of the large-diameter portion (23) adjacent to the hub (26, 36).

3. The power transmission device (10, 40) according to claim 1 or 2, **characterized in that** the second hole (25B) is formed at the center of the small-diameter portion (24) and is adjacent to the first hole (25A).

4. The power transmission device (10, 40) according to any one of claims 1 through 3, **characterized in that** external threads (24A) of the small-diameter portion (24) and internal threads (27A, 39A) of the threaded hole (27, 39) of the hub (26, 36) are formed in such directions that the torque transmitting member (22) and the hub (26, 36) are tightened to each other by torque during power transmission.

5. The power transmission device (10, 40) according to any one of claims 1 through 4, **characterized in that** the hub (26) has a power shutoff portion (29) which is broken when a torque exceeding a permissible value is produced between the pulley (11) and the outer shaft portion (18), wherein when the power shutoff portion (29) is broken, the hub (26) is divided into two parts including a radially outer portion (26A) and a radially inner portion (26B).

6. The power transmission device (10, 40) according to claim 5, **characterized in that** the power shutoff portion (29) has a plurality of connecting portions (26C) which connect the radially outer portion (26A) and the radially inner portion (26B).

7. The power transmission device (10, 40) according to any one of claims 1 through 6, **characterized in that** the hub (36) has a hub body (37) and a power shutoff member (38), wherein the hub body (37) is connected to the pulley (11) and in contact with the thrust-load receiving portion (23A) of the large-diameter portion (23), wherein the power shutoff member (38) is interposed between the hub body (37) and the torque transmitting member (22) and has the threaded hole (39), wherein the power shutoff member (38) has an outer periphery (38A) and a breakable portion (38B), wherein the outer periphery (38A) of the power shutoff member (38) is mechanically fixed to the hub body (37), wherein when a torque exceeding a permissible value is produced between the pulley (11) and the outer shaft portion (18), the breakable portion (38B) of the power shutoff member (38) is broken based on thrust load occurring in proportion to the torque.

8. The power transmission device (10, 40) according to claim 7, **characterized in that** the outer periphery (38A) of the power shutoff member (38) is hexagon-shaped as viewed along an axis (P) of the rotary shaft (17), and the hub body (37) has a hexagonal socket into which the power shutoff member (38) is fitted, wherein the power shutoff member (38) is fitted in the hexagonal socket of the hub body (37) through spigot joint.

9. The power transmission device (10, 40) according to any one of claims 1 through 8, **characterized in that** the torque transmitting member (22) has at one end thereof a hole (25C) which is adjacent to the second hole (25B), wherein the second shaft portion (18B) has at one end thereof a bolt hole (20) in alignment with an axis (P) of the rotary shaft (17), wherein a bolt (21) is inserted through the hole (25C) of the torque transmitting member (22) and screwed into the bolt hole (20) of the second shaft portion (18B) for fastening securely the outer shaft portion (18) to the torque transmitting member (22).
